# EUROPEAN PATENT APPLICATION

(11) **EP 1 238 589 A1**
(43) Date of publication of application: **11.09.2002**
(21) Application number: 02251674.4
(22) Date of filing: 08.03.2002
(51) Int. Cl.: A23C 13/08, A23C 3/04, A23G 9/06, A23G 9/02, A23L 3/375, C11B 15/00

(54) **Cryogenic processing methods and apparatus**

(30) Priority: 09.03.2001 GB 0105907
(71) Applicant: The BOC Group plc, Windlesham Surrey GU20 6HJ (GB)
(72) Inventor: Brooker, Brian Edward, Sonning, Berkshire RG4 6ur (GB)
(74) Representative: Bousfield, Roger James

(57) **Abstract**

A method of forming a food product which contains an emulsion, the method comprising contacting a spray of the product in liquid form (A) with a cryogen (B) (e.g. nitrogen) so as to cool the liquid product and effect a rapid conversion of the liquid product to a solid.

## Description

Edible fats and oils consist predominantly of triglycerides. Typically, fats are mixtures of triglycerides, some of which have a melting point higher than room or ambient temperature and therefore contain solids in the form of fat crystals; whereas oils are typically mixtures of triglycerides all of which have low melting points and therefore contain no crystalline fat at room or ambient temperature.

Many food products contain or consist of an oil phase in which fat crystals are dispersed in order to confer some desirable physical property, functionality or "mouthfeel". These properties may be further modified by dispersing the oil phase in a water continuous system to produce an oil-in-water emulsion or, conversely, water may be dispersed in a continuous oil phase to produce a water-in-oil emulsion.

The present invention relates to the processing of food products that comprise or consist of an oil-in-water emulsion or a water-in-oil emulsion in which solid (crystalline) fat is present in the oil phase, and whose solid fat content may range from 1% to 99% of the total triglyceride content. The presence of even small amounts of solid fat in oil-in-water emulsions and water-in-oil emulsions influences not only their physical properties and their mouthfeel but also their functional properties and emulsion stability.

The functionality of some oil-in-water emulsions containing dairy or vegetable fats in products such as whipping cream, ice cream mixes and toppings, is dependent upon the presence of a solid or crystalline fat phase that will de-stabilise the emulsion during shearing, whipping or churning. The probable mechanism is that fat crystals protruding from the surface of oil droplets, penetrate the oil-water interface of adjacent droplets and form bridges that hold the droplets together. Following this process, the fat globules or oil droplets may undergo partial or complete coalescence, depending on the solid fat content of the globules. A high solid fat content in the disperse oil phase limits the extent of coalescence whereas a relatively low solid fat content (ie high oil content) will allow it to proceed almost to completion so that at the end of the process the identity of individual droplets can scarcely be discerned.

Thus, in the case of dairy cream of total triglyceride content 35% to 40%, whipping at 4°C produces only partial coalescence of the fat globules, the formation of a network of fat globules and the entrapment of air, resulting in whipped cream. For this process to take place, it is believed that the average solid fat content of the fat globules must be at least 40% and hence the whipping is carried out at low temperature.

If, on the other hand, dairy cream is held at a slightly higher temperature, for example 15°C, the average solid fat content of the fat globules tends to fall below the 40% value required for partial coalescence and air stabilisation. At this elevated temperature, whipping or churning of cream produces more pronounced fat globule coalescence and the formation of globule clusters or grains which can be worked in to a fat-continuous material to form butter.

Similar principles apply during the freezing and churning of ice cream mixes that consist of oil-in-water emulsions of dairy or vegetable fats whose typical total triglyceride content is 5% to 15%. During churning at low temperature, emulsion destabilisation takes place by the interactions between surface fat crystals of adjacent fat globules; the resulting partial coalescence of fat globules leads to the entrapment and stabilisation of air at the same time as ice crystals are forming and growing.

During the processing of such emulsions containing solid fat, an oil-in-water emulsion is typically formed by first heating the ingredients above the melting point of the solid fat, for example 50°C to 70°C, followed by passage through an homogeniser and/or pasteuriser above 70°C. Subsequent re-crystallisation of the solid fat phase in the fat globules during cooling is very slow, even at low storage temperatures (for example 4°C to 8°C). This is because the crystal nuclei necessary to initiate the re-crystallisation of the solid fat are present only in very small numbers in the disperse oil phase. Yet without solid, crystalline fat present, emulsion destabilisation and globule coalescence cannot take place during whipping, churning or shearing to produce typical products of the kind referred to above.

Therefore, it is current industrial practice that emulsions of dairy or vegetable fats that have been homogenised/pasteurised and are destined for the production of whipping cream, butter, ice cream, toppings etc, must be "conditioned" before they can be used. This generally involves storage of the emulsion in a bulk tank, typically at 4°C to 8°C, for up to 48 hours, during which time slow re-crystallisation of the solid fat phase takes place. Thus, if an emulsion, such as a dairy whipping cream of total fat content 35% to 40%, is rapidly cooled from the exit temperature of a homogeniser or pasteuriser to 4°C and then whipped, emulsion destabilisation and fat globule coalescence does not take place because of the absence of crystalline or solid fat and a stable foam of high overrun is not formed. Similarly, if the same dairy cream is rapidly cooled from the exit temperature of a homogeniser or pasteuriser to, say, 15°C and then churned, fat globule coalescence does not take place and butter grains are not formed.

The invention is concerned with an improved method for forming such food products which can generally overcome the difficulties described above with existing methods.

In accordance with the invention, there is provided a method of forming a food product which contains an emulsion, the method comprising contacting the product in liquid form with a cryogen so as to cool the liquid product and effect a rapid conversion of the liquid product to a solid.

The food product is preferably in the form of a spray when contacted with cryogen. Preferably also the cryogen is in the form of a spray or stream at the time of contacting the food product.

The invention is particularly applicable to the rapid crystallisation of the entire solid fat phase in oil-in-water or water-in-oil emulsions in which the solid fat phase is dispersed in the oil phase. Advantageously, the solid phase comprises between 1% and 99% of the total triglyceride content. In general, crystallisation will be completed on return of the emulsion to ambient temperature from that of the cryogen.

The cryogen is advantageously liquid nitrogen, solid or liquid carbon dioxide, for example carbon dioxide snow or liquid air.

The temperature of the cryogen (and to which this food product will be cooled) is preferably down to at least minus 75°C, for example 79.8°C of carbon dioxide snow, or more preferably down to at least minus 185°C, for example minus 194°C of liquid air or minus 196°C of liquid nitrogen. Intermediate temperatures of between minus 75°C and minus 196°C may usefully be employed by mixing different cryogens or by mixing a cryogen, for example liquid nitrogen, with air.

By contrast, using the method of the invention it has been found possible to take an oil-in-water emulsion of dairy or vegetable fat, such as dairy whipping cream of 35% to 40% total fat content, at the exit temperature of a homogeniser or pasteuriser, to rapidly cool it to the temperature of solid carbon dioxide or of a liquid cryogen, such as air or nitrogen, such that when restored to 4°C after an interval of minutes, whipping or churning produces emulsion destabilisation and partial coalescence of the fat globules and the cream readily forms a stable foam of high overrun. This means that cryogenic cooling is able to induce the very rapid nucleation and crystallisation of solid fat in the emulsion droplets to at least the 40% level at 4°C.

Because cryogenic cooling produces very rapid crystallisation of the solid fat phase, the resulting fat crystals are typically smaller and more numerous than those found in conventionally processed cream. This produces slight changes in the emulsion stability of the cream and in its whipping properties.

By way of example, pasteurised whipping cream with a total fat content of 38% was obtained from a commercial source and whipped at 4°C to determine its whipping time (to maximum stiffness), volume increase (overrun) and stiffness. The cream was then heated to 60°C to melt all of the solid fat and then either a) stored at 4°C for 24 hours before whipping at 4°C to act as an internal control or b) cooled to 4°C for a half hour in an ice bath and whipped or c) rapidly frozen to the temperature of liquid nitrogen using the method of the invention, immediately thawed by warming for a half hour in an ice bath to 4°C and whipped. The results are shown in Table 1.

**Table 1**

| **Treatment of whipping cream** | **Whipping time (s)** | **Volume** **increase (%)** | **Stiffness/g** |
|---|---|---|---|
| As purchased - whipped at 4°C. | 98.2 ± 5.1 | 94.8 ± 6.2 | 69.8 ± 9.5 |
| Control - cream heated to 60°C. Cooled to 4°C for 24 hours. Whipped at 4°C. | 96.8 ± 3.9 | 97.5 ± 3.7 | 77.6 ± 3.0 |
| Cream heated to 60°C then rapidly cooled by application of the invention using liquid nitrogen. Restored to 4°C and immediately whipped. | 82 2 ± 4.2 | 84.8 ± 5.1 | 89.9 ± 2.9 |
| Cream heated to 60°C then cooled to 4°C in an ice bath for a half hour before immediate whipping at 4°C. | 220 ± 24.1 | 16.1 ± 3.2 | 21.1 ± 1.7 |

These results show that:
1. Application of the invention to whipping cream that has been heated to 60°C to melt all of the solid fat allows emulsion de-stabilisation to take place and the cream to be whipped immediately it has been brought to 4°C to produce whipped cream with a volume increase, stiffness and whipping time similar to that of controls.
2. However, whipping cream that has been heated to 60°C to melt all of the solid fat and cooled slowly (relative to the method of the invention) to 4°C prior to whipping, shows little evidence of emulsion de-stabilisation and produces a foam that has a small volume increase, low stiffness and long whipping time and does not resemble the control.
3. Whipping cream processed by application of the invention whips to produce a foam with shorter whipping time, lower volume increase and higher stiffness, indicating that crystallisation of the globular fat during rapid cooling with a cryogen differs from that in conventionally processed cream.

By using the method of the invention, it has been found possible to take the same dairy whipping cream (or a single cream of total solid fat content 18% or a double cream of total solid fat content 58%) at the exit temperature of a homogeniser or pasteuriser, to rapidly cool it to the temperature of solid carbon dioxide or of a liquid cryogen, such as air or nitrogen, such that when restored to 15°C after an interval of minutes, churning produces emulsion destabilisation and a greater degree of fat globule coalescence and it readily forms butter grains that can be worked together to produce butter.

The method of the invention involves rapid cooling of emulsions to the temperature of solid carbon dioxide or a liquid cryogen, such as air or nitrogen. This induces the formation of large numbers of crystal nuclei in the oil-in-water emulsions and hence the rapid growth of individual fat crystals. The large number of crystal nuclei that results from the high cooling rate (preferably greater than 1,000°C per second) also ensures that all of the solid fat is crystallised very quickly, for example within a matter of seconds; the solid fat is in the form of larger numbers of smaller fat crystals than would be possible using standard methods of cooling, such as scraped surface technology, in which the cooling rate is relatively low (for example less than 600°C/min ). In the latter, more conventionally used method, the emulsion is cooled but fat crystallisation is slow because there is no control over crystal nucleation; therefore there is little or no control over the crystal size and shape of the solid fat phase in the oil-in-water emulsion. In contrast, the method of the invention ensures that all of the solid fat phase in an oil-in-water emulsion is rapidly crystallised and that the crystal size and shape of fat crystals (of any given composition) is consistently and controllably produced.

Alternatively, the emulsion may be mixed with liquid carbon dioxide (CO₂) under pressure such that, on release of the pressure after rapid cooling of the emulsion, the food product can be sprayed with a resulting "atomisation" of the emulsion.

The method of the invention is universal in its application to emulsions containing a solid fat phase and therefore is applicable also to food systems in which crystalline fat is used solely to impart desirable physical and/or organoleptic properties of the emulsion rather than to de-stabilise it, as referred to above for whipping cream, butter and ice cream mixes. For example, the method of the invention can be effectively used in the processing of products such as salad dressings, sauces, mixed ingredient preparations and other products that are composed of or contain an oil-in-water emulsion containing a solid fat phase. In all these cases, crystallisation of the solid fat phase is completed within minutes when the method of the invention is used to cool the product stream from a homogeniser, pasteuriser or other unit process that has been operated at a temperature that exceeds the melting point of the solid fat phase.

Rapid cooling is most simply achieved by taking the oil-in-water emulsion at the exit temperature of a homogeniser or pasteuriser, producing a spray of the emulsion in such a way that it is incident on a stream or spray of carbon dioxide snow or a liquid cryogen such as air or nitrogen. The resulting solid may be collected and stored frozen or returned immediately to the temperature at which the emulsion is to be used for further processing. For example, the liquid food product is preferably directed in to the cryogen by causing the spray thereof to contact a spray of cryogenic liquid. More preferably, the spray of liquid food product is directed downwardly in to the spray of liquid cryogen which may itself be preferably directed substantially horizontally or upwardly in to a counter-current spray of the liquid food product. This latter method is generally known as "spray crystallisation" and is described in our European Patent Specification No. 0 393 963.

Many foods such as margarines, dairy and non-dairy spreads, low fat spreads and some bakery shortenings containing multiple ingredients are water-in-oil emulsions in which the disperse aqueous phase is stabilised by the presence of fat crystals in the oil phase and/or by the presence of emulsifiers such as monoglycerides that typically accumulate at the oil-water interface. The amount of triglyceride they contain typically varies from 20% to 80% by weight, of which solid fat is usually in the range 12% to 20%. These foods are usually made commercially using what is known as "scraped surface technology" in which a liquid or semi-liquid product containing a melted fat (such as a water-in-oil emulsion) is brought in to contact with a cold surface, where the fat crystallises and is scraped away so that more crystallisation can take place. However, the rate of cooling of the emulsion is typically no more than 600°C /minute.

Water-in-oil emulsions are prepared from a blend of oil and solid fat to constitute the oil phase and an aqueous phase of very variable composition. It is common for an emulsifier, for example a monoglyceride, to be used to stabilise the aqueous phase dispersion. The solid fat is melted in the oil phase and an aqueous phase added to produce a water-in-oil emulsion that is first pasteurised and then cooled, generally in a scraped surface heat exchanger, to produce a stable water-in-oil emulsion. During cooling in the scraped surface tubes, crystallisation of the solid fat phase is initiated by the formation of relatively small numbers of crystal nuclei but neither nucleation nor crystal growth is complete by the end of the cooling process. The progressive growth of fat crystals during storage increases the stiffness of the resulting mixture, which gives a set, firm product. However, in all products processed by this method, the time required for a stable fat crystal network to grow and for optimal firmness of the emulsion to be reached may take weeks, and the prolonged storage of a food product as an essential element of the manufacturing process is undesirable and costly to the food industry and leads to additional cost to the consumer. Moreover, the size of fat crystals in the water-in-oil emulsion produced under these conditions of storage or "tempering" is difficult to control and therefore it is often found in practice that shelf life is variable and that consistency of product quality is difficult to achieve.

However, the present invention provides a method of processing a food product which comprises or contains a water-in-oil emulsion, the method comprising bringing the product in a liquid state to a cooling device and there rapidly cooling the product to the temperature of solid carbon dioxide or of a liquid cryogen, such as air or nitrogen using a device in which a spray of the emulsion is incident on a stream of carbon dioxide snow or a liquid cryogen. It has been discovered that the application of such rapid cooling rates (greater than 1000°C per second) provides a much greater number of fat crystals of consistent and much smaller average size - typically no more than 0.5µm - than can be produced utilising conventional cooling processes as are used in known food processing methods. This result can be achieved because the method of the invention promotes the formation of large numbers of fat crystal nuclei and greatly accelerates crystal growth so that the final solid fat content is reached immediately the product is brought to ambient temperature from the temperature of the cryogen. Crystallisation of fat in the water-in-oil emulsion does not take place over an extended period of time and therefore the need for costly storage of the products so that crystallisation can take place is obviated. Additionally, it has been discovered that fat crystals produced by the method of the invention in water-in-oil emulsions are extremely stable, resist the storage tempering effects observed in fats processed by scraped surface technology, in which there may be dramatic changes in fat crystal size and shape, and, that consequently they ensure a long and stable shelf-life in the product.

This pattern of re-crystallisation and the stability of fat crystals produced by the method of the invention has also been found to have an effect on the state of dispersion of the aqueous phase, especially in products such as low-fat spreads where the amount of fat and oil (typically 60% of total weight but which can be as low as 40%) to stabilise the aqueous phase dispersion is small compared to emulsions such as margarines in which the amount of fat and oil present is typically 80% of the total weight of the product.

In the case of some fat blends used in the production of margarines and spreads by scraped surface technology, the average particle size of the aqueous phase droplets may increase during storage as changes in the size and shape of fat crystals develop in response to tempering effects. In consequence, an undesirable phase separation of the aqueous phase may take place that is visible to the naked eye, either at the surface of the margarine or spread or during spreading and there may be unacceptable growth of micro-organisms in and on the product. In such cases, it has been discovered that when the margarine or spread is processed by the method of the invention, an extremely fine dispersion of aqueous phase is produced and changes in the aqueous phase droplet size with storage are minimal because the crystalline fat phase of the product is stable. Additionally, this provides exceptional microbiological stability. A typical example is given in Table 2 which shows the average particle size of aqueous phase droplets in a commercial spread formulation containing 40% aqueous phase and produced by a) scraped surface technology and b) cryogenic spray crystallisation, with storage time. Storage temperature is 6°C.

**Table 2**

| **Method of preparation** | **Average particle size of aqueous phase droplets (µm) after (x) weeks of storage** | | | | | |
|---|---|---|---|---|---|---|
| | **1** | **2** | **4** | **6** | **9** | **12** |
| Scraped surface technology | 5.9 | 7.5 | 9.4 | 12.7 | 18.5 | 28.2 |
| Cryogenic spray re-crystallisation | 3.2 | 3.7 | 3.9 | 4.5 | 4.5 | 4.7 |

Thus, by this method, it is possible to produce a very rapid and controlled crystallisation of the fat phase of water-in-oil emulsions that results in exceptional uniformity of product rheology and eating quality, irrespective of the composition of the triglyceride phase(s). Moreover, it has been found that the resulting disperse aqueous phase consists of an extremely fine and uniform dispersion of droplets that is effectively stabilised in the continuous oil phase.

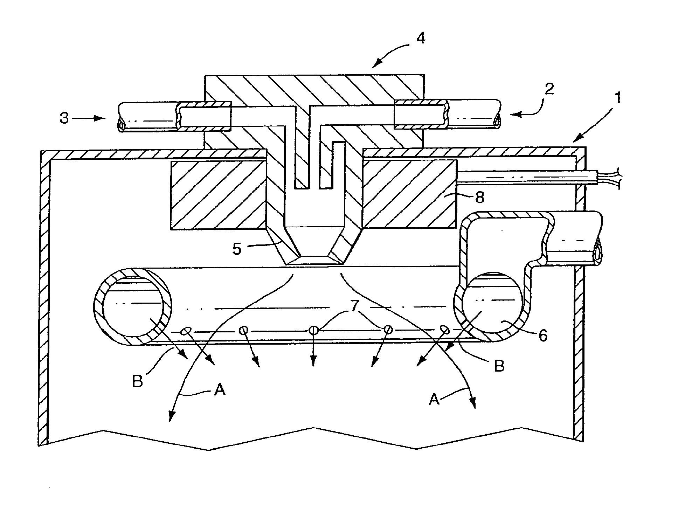

For a better understanding of the invention, reference will now be made, by way of exemplification only, to the accompanying drawing showing spray crystallisation apparatus for carrying out the method of the invention.

With reference to the drawing, there is shown the principal parts of a spray crystallisation apparatus in which, in particular, an atomised food product spray and a cryogen spray are produced and caused to impinge with each other. The apparatus is particularly suited to the use of liquid nitrogen as the cryogen.

The apparatus shows a cryogenic spray crystallisation head having a body portion shown generally at 1 and, an inlet 2 for the supply of liquid fat thereto and an inlet 3 for the supply of pressurised air thereto. Inlets 2 and 3 lead to an atomising nozzle arrangement 4 top mounted in the body 1 which is designed to break up liquid emulsion introduced to it in to very small droplets when the emulsion and air are simultaneously introduced. Commercially available "Venturi" nozzles are preferred. Valves (not shown) are present to control the flow of pressured air and liquid food product to a nozzle outlet 5.

The resulting spray of atomised liquid food product is shown schematically at 'A'.

Surrounding the position of the spray A is a hollow cryogen spray ring 6 with a diameter, for example 20cm, sized to surround the anticipated spray maximum size and being concentric with the nozzle 4. The inner and lower surfaces of the spray ring 6 are drilled with an evenly spaced array of small holes 7 selected to suit the flow rates of emulsion, the required rate of cooling of the fat particles, etc.

The spray of liquid cryogen is represented by the arrows 'B' which generally converge downwardly and inwardly of the ring 6.

A heating element 8 is present about the nozzle 4 and terminating above the nozzle outlet 5 to prevent the emulsion being injected therethrough from solidifying within the nozzle. The amount of heat supplied is regulated and controlled to a desired temperature by a voltage controller (not shown).

A further heat may be employed around the body portion 1 to prevent any emulsion from building up on the sides of the apparatus.

In use of the apparatus, the cryogen spray therefore impinges on the liquid food product spray and causes a very rapid cooling rate on the food product. Solidified food product falls to the base of the apparatus (which may include a plurality of such body portion/spray arrangements) and may be removed therefrom by means, for example, of driven auger.

The rate of cooling of the liquid food product can conveniently be calculated by known means with particular reference to parameters including the particle size of the emulsion, the temperature of the emulsion, the specific heat of the emulsion, the velocity of the emulsion particles and the temperature of the cryogen.

The apparatus shown in the drawing can be readily modified by skilled engineers to suit the use of carbon dioxide snow, liquid air or mixtures of nitrogen with air as alternative cryogens.

## Claims

1. A method of forming a food product which contains an emulsion, the method comprising contacting the product in liquid form with a cryogen so as to cool the liquid product and effect a rapid conversion of the liquid product to a solid.

2. A method according to Claim 1 which is applied to the rapid crystallisation of the entire solid fat phase on oil-in-water or water-in-oil emulsions in which the solid fat phase is dispensed in the oil phase.

3. A method according to Claim 1 or Claim 2 in which the solid phase comprises between 1% and 99% of the total triglyceride content.

4. A method according to any preceding claim in which the cryogen is nitrogen.

5. A method according to any one of Claims 1 to 3 in which the cryogen is carbon dioxide.

6. A method according to any one of Claims 1 to 3 in which the cryogen is liquid air.

7. A method according to any preceding claim in which the temperature of the cryogen is down to at least minus 75°C.

8. A method according to Claim 7 in which the temperature of the cryogen is down to at least minus 185°C.

9. A method according to any preceding claim in which the food product is an emulsion containing a solid fat phase.

10. A method according to any preceding claim in which the food product is an oil-in-water emulsion.

11. A method according to any preceding claim in which the food product is a water-in-oil emulsion.
